# EUROPEAN PATENT SPECIFICATION

(11) **EP 1 927 534 B1**
(45) Date of publication and mention of the grant of the patent: **14.10.2009**
(21) Application number: 06125282.1
(22) Date of filing: 01.12.2006
(51) Int. Cl.: B62D 25/04, B62D 21/02

(54) **Unitary hydroformed roof support pillar**
Einteilig durch hochdruckfomrn hergestellte Dachtragsäule
Colonne unitaire de support de toit hydroformée

(43) Date of publication of application: 04.06.2008
(73) Proprietor: Ford Global Technologies, LLC, Dearborn, MI 48126 (US); Vari-Form, Inc., Warren MI 48089-2614 (US)
(72) Inventor: Chen, Xiaoming, Canton, MI 48188 (US); Faruque, Omar, Ann Arbor, MI 48104 (US); Guimberteau, Thierry, Livonia, MI 48150 (US); Kuo, Everett, Troy, MI 48098 (US); Mehta, Raj, Westland, MI 48185 (US); Wagner, David, Northville, MI 48167 (US); Gericke, Dean, Brighton, MI 48116 (US); Szalay, Daniel, Belleville, MI 48111 (US)
(74) Representative: Messulam, Alec Moses

(56) References cited:
- WO-A-03/070543
- US-A1- 2006 273 630
- US-B1- 6 578 909

## Description

### Field of the Invention

The present invention relates to a unitary hydroformed roof support pillar for a vehicle.

### Background Art

Roof support pillars support the roof of a vehicle and are located between the windows and doors of a vehicle. Roof support pillars are frequently identified as A, B, C and in some instances D-pillars depending on the vehicle style. A B-pillar is generally located immediately behind the front door of a vehicle. The B-pillar is an important element in determining roof strength and the degree of side impact intrusion.

Passenger vehicle designs are tested for roof strength and side impact strength. Conventional B-pillars are fabricated as multiple stamped sheet metal parts that are generally spot welded together. It is possible to improve the strength of conventional B-pillars by forming the sheet metal parts from high grade material, such as dual phase and boron steels. B-pillars may also be made stronger by using thicker gauge sheet metal components. However, the use of high strength alloys and thicker sheet metal may increase the weight of a vehicle and also increases the cost to manufacture the B-pillar. Even with the use of thicker alloy components, B-pillars of conventional design may not always meet stringent test requirements for roof strength and side impact performance.

It has been proposed to use hydroformed tubes to fabricate vehicles having space frame construction in, for example, U.S. Patent No. 6,282,790. This patent proposes integrally forming two B-pillars and a roof bow in a single U-shaped piece that is connected to the top surface of two tubular rockers. This proposed design presents a manufacturing problem in that the closed box section of the parts precludes spot welding assembly techniques. Also, the longitudinal thickness of the hydroformed tube portion between vehicle doors is objectionable from a styling standpoint.

Other proposed designs for hydroformed B-pillars are disclosed in published U.S. patent application US 2004/0239091 A1 and published U.S. patent application US 2005/0023865 A1. However, these proposed designs require reinforcing brackets to connect the B-pillar to a roof rail. In addition, the B-pillar is not reinforced by the roof rail and rocker panel members. In the event of a side impact intrusion, the connection of the B-pillar to the roof rail and rocker must rely upon welds for structural integrity. In addition, the width of the B-pillar in the longitudinal vehicle direction limits styling and adversely impacts vehicle appearance.

The present invention is directed to solving the above problems and other problems relating to the manufacture of a roof support pillar with minimum part count and improved roof crush and side impact performance. Prior art methods of hydroforming roof support pillars face technical barriers relating to the hydroforming procedure, methods of joining hydroformed components and packaging constraints. In particular, it is difficult for a hydroformed tube that has a uniform perimeter to accommodate desired section variations for vehicle styling.

Prior art multiple-piece B-pillars are designed to connect the roof rail, rocker and body outer panels. Connection between these elements are critical for vehicle body strength and noise, vibration and hardness (NVH) joint stiffness. Packaging constraints for B-pillars include providing clearance for seatbelt retractors and adequate mounting surfaces for door latch and hinge reinforcements.

Other examples of B pillars made via hydroforming for increased strength are disclosed in WO03/070543 and US6, 578, 909, any of said documents is taken as bass for the preamble of independent claim 1.

The above problems and design challenges are addressed by the present invention as summarized below.

### Summary of the invention

According to the main aspect of the present invention, there is provided a vehicle roof support assembly, comprising a roof rail; a rocker panel; and a one-piece, partially hollow support pillar having an inner wall, an outer wall, a front wall and a rear wall, and having a tubular lower section that extends upwardly from the rocker panel, an upper section that extends downwardly from the roof rail, wherein the upper section has a convergent tubular shape formed by the inner wall, the outer wall, the front wall, and the rear wall that converge in the vertically upward direction, and has flanges extending longitudinally from the front wall and the rear wall, the upper end of the convergent tubular section terminating in a compressed roof rail flange that includes only the inner wall and the outer wall and that is assembled to an outer surface and an upper surface of the roof rail, characterised in that the flanges extending from the front wall and the rear wall begin at an intermediate point on the front wall and rear wall and increase in longitudinal extent in the vertical vehicle direction.

The support pillar may have a tubular lower section that terminates in a compressed rocker flange that includes only an inner wall and an outer wall and that is assembled to an outer surface of the rocker panel. The rocker flange may extend around to the bottom surface of the rocker panel. The rocker flange may have a spot weld flange disposed below the rocker panel. The tubular lower portion of the support pillar may have an inner wall that defines a concave portion in which a seatbelt retractor may be assembled.

The roof rail preferably defines an indentation relative to an outer surface of the roof onto which the roof rail flange of the support pillar is received. The roof rail flange preferably has at least two layers of metal wherein at least one layer of metal is removed from certain portions to facilitate spot welding the roof rail flange to the roof rail. The roof rail flange overlaps and is welded to an end flange of a transversely extending roof bow.

According to a further feature of the invention, an upper portion of the tubular body portion may have a tubular rectilinear cross section at a belt line of the vehicle. The rectilinear cross section of the upper portion of the tubular body portion is reduced in the vertical vehicle direction. The forwardly extending flange and rearwardly extending flange of the upper portion of the tubular body may increase in longitudinal extent along the vertical vehicle direction. The forward extending flange and rearward extending flange are formed by collapsing a portion of the tubular member from which the tubular portion is formed in the hydroforming operation.

According to further features of the invention, the rocker flange on the lower end of the tubular body portion may be formed by collapsing a portion of the tubular member from which the tubular body portion is formed.

### Brief description of the drawings

The invention will now be described further, by way of example, with reference to the accompanying drawings, in which :-
Figure 1 is a fragmentary side elevation view of a B-pillar, roof rail, roof bow and rocker;
Figure 2 is a side elevation view of a B-pillar;
Figure 3 is a cross-sectional view taken along the line 3-3 in Figure 1;
Figure 4 is a cross-sectional view taken along the line 4-4 in Figure 1;
Figure 5 is a cross-sectional view taken along the line 5-5 in Figure 1;
Figure 6 is a fragmentary perspective view of a B-pillar, roof rail and roof bow; and
Figure 7 is a fragmentary front elevation view of a B-pillar, roof rail and roof bow.

### Detailed description of the preferred embodiment(s)

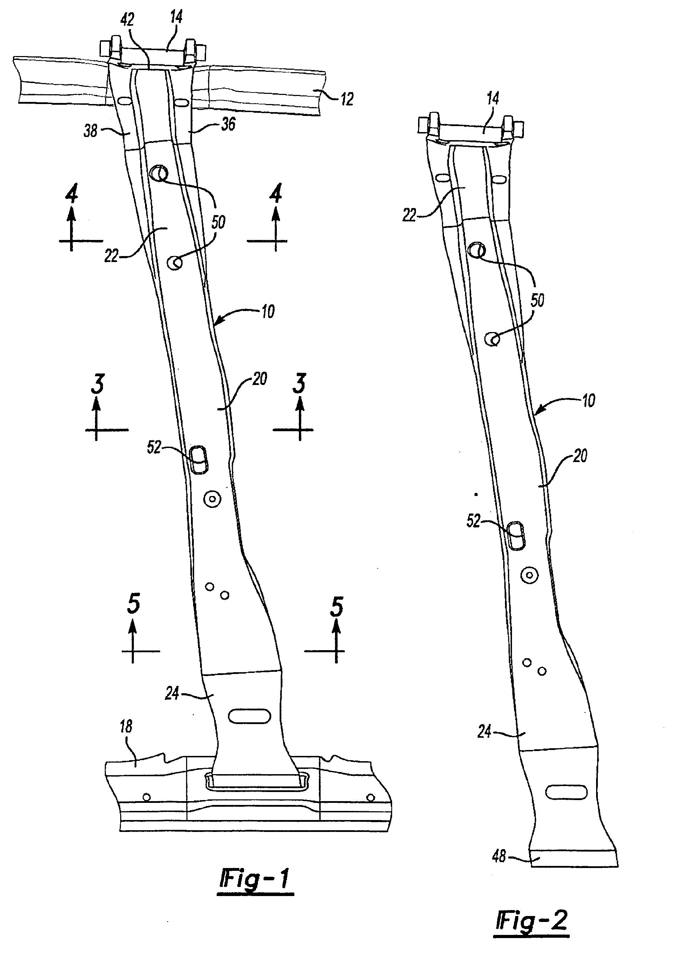

Referring to Figure 1, a one-piece B-pillar 10 is shown attached to a roof rail 12 and roof bow 14. The B-pillar 10 is also attached to a rocker 18.

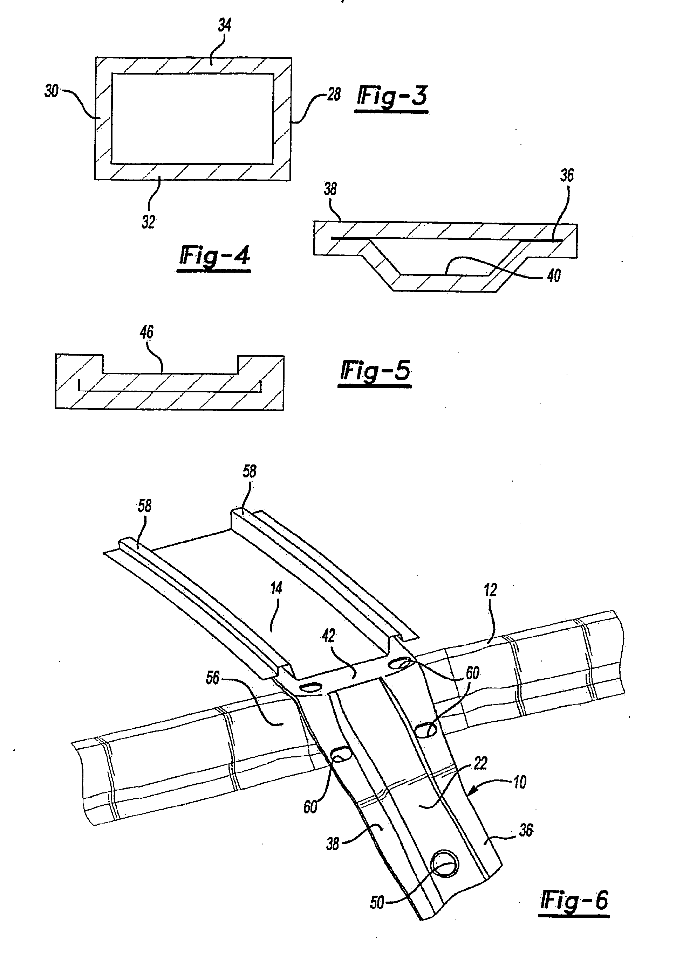

The B-pillar 10 has a middle portion 20 and an upper portion 22 extending upwardly from the middle portion 20. A lower portion 24 extends downwardly from the middle portion 20. Referring to Figure 3, which is a cross section taken through the middle portion 20, the cross section of the B-pillar 10 in that area includes a front wall 28, a rear wall 30, and outer wall 32 and an inner wall 34. The four walls 28-34 form a substantially rectangular box shaped beam.

Referring to Figure 4, a cross section taken through the upper portion 22 of the B-pillar 10 is illustrated. A front flange 36 and a rear flange 38 extend forwardly and rearwardly, respectively, from a trapezoidal section 40. The trapezoidal section 40 extends upwardly as a continuation of the walls 28-34 with the front wall 28 and rear wall 30 converging toward the outer wall 32 in the vertical direction. The upper portion 22 of the B-pillar 10 terminates in a flat top portion 42. The flat top portion 42 extends on the outer and upper sides of the roof rail 12 and is received below the roof bow 14.

Referring to Figure 5, a cross section taken through the lower portion 24 of the B-pillar 10 is shown to define an inner concave portion 46. The inner concave portion 46 may receive a seat belt retractor mechanism (not shown) if desired.

Referring to Figure 2, the one-piece B-pillar 10 is shown in conjunction with the roof bow 14. The B-pillar 10 includes on its lower portion 24 the inner concave portion 46 that leads to a rocker attachment flange 48 at its lower end. The B-pillar includes D-ring attachment holes 50 and a wiring duct access hole 52.

Referring to Figure 6, the connection between the B-pillar 10, roof rail 12 and roof bow 14 is shown in greater detail. The upper portion 22 of the B-pillar 10 includes a front flange 36 and a rear flange 38 that are formed in a hydroforming operation by compressing the beam from which the B-pillar is formed. The upper portion 22 of the B-pillar 10 may be seated in an indentation 56 formed on the roof rail 12. Ribs 58 may be formed on the roof bow 14 to provide the desired degree of rigidity and reinforce the roof structure.

A plurality of weld access areas may be provided in front and rear flanges 36 and 38 by removing a single layer area 60 of the tubular blank prior to the hydroforming operation. The single layer area 60 facilitates welding operations for joining the roof rail to the B-pillar.

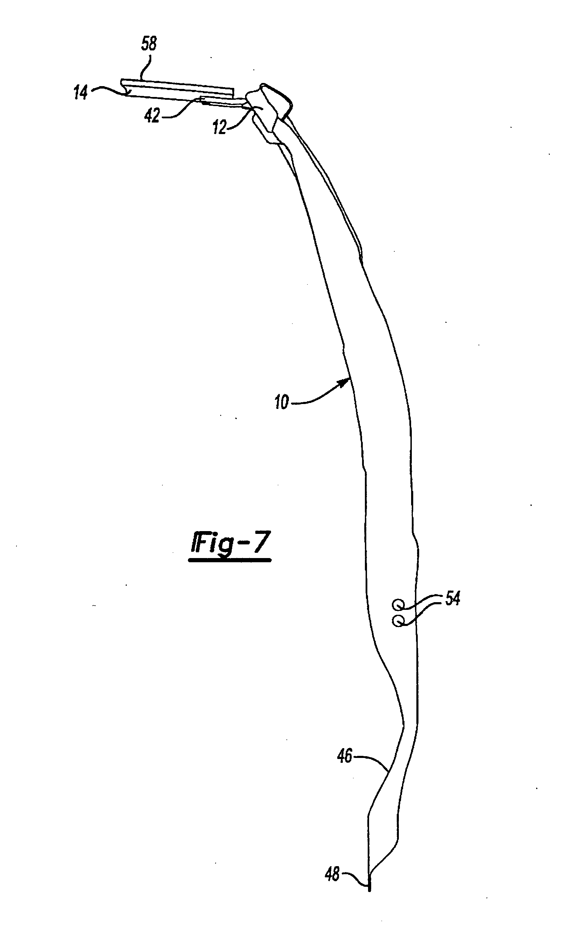

Referring to Figure 7, the B-pillar 10 is secured to a body side outer panel (not shown). The B-pillar is joined to the roof rail 12 and the roof bow 14 at its upper end. Hinge hardware holes 54 or other door hardware such as striker plates or locking plates may be secured to the front wall 28 and rear wall 30 of the B-pillar by means of holes such as hinge hardware holes 54. The upper end of the B-pillar includes the flat top portion 42 that extends over the roof rail 12 and under the roof bow 14 as previously described.

While the best mode for carrying out the invention has been described in detail, those familiar with the art to which this invention relates will recognize various alternative designs and embodiments falling within the scope of the present invention as defined by the following claims.

## Claims

1. A vehicle roof support assembly, comprising:
a roof rail (12);
a rocker panel (18); and
a one-piece, partially hollow support pillar (10) having an inner wall (34), an outer wall (32), a front wall (28) and a rear wall (30), and having a tubular lower section (24) that extends upwardly from the rocker panel (18), an upper section (22) that extends downwardly from the roof rail (12), wherein the upper section (22) has a convergent tubular shape formed by the inner wall (34), the outer wall (32), the front wall (28), and the rear wall (30) that converge in the vertically upward direction, and has flanges (36,38) extending longitudinally from the front wall and the rear wall, the upper end of the convergent tubular section (22) terminating in a compressed roof rail flange (42) that includes only the inner wall and the outer wall and that is assembled to an outer surface and an upper surface of the roof rail (12).
**characterised in that** the flanges extending from the front wall and the rear wall begin at an intermediate point on the front wall and rear wall and increase in longitudinal extent in the vertical vehicle direction.

2. A vehicle roof support assembly as claimed in Claim 1, wherein the tubular lower section (24) terminates in a compressed rocker flange (48) that includes only an inner wall and an outer wall and that is assembled to an outer surface of the rocker panel (18).

3. A vehicle roof support assembly as claimed in Claim 2, wherein the rocker flange (48) extends around to a bottom surface of the rocker panel (18).

4. A vehicle roof support assembly as claimed in Claim 3, wherein the rocker flange (48) has a spot weld flange disposed below the rocker panel.

5. A vehicle roof support assembly as claimed in any preceding claim, wherein the tubular lower portion (24) has an inner wall that defines a concave portion (46) in which a seat belt retractor may be assembled.

6. A vehicle roof support assembly as claimed in any preceding claim, wherein the roof rail (12) defines an indentation relative to an outer surface of the roof onto which the roof rail flange (42) of the support pillar is received.

7. A vehicle roof support assembly as claimed in any preceding claim, wherein the roof rail flange (42) has at least two layers of metal and wherein at least one layer of metal is removed in limited areas to facilitate spot welding the roof rail flange (42) to the roof rail (12).

8. A vehicle roof support assembly as claimed in any preceding claim, further comprising a roof bow (14) extending in a transverse vehicle direction and wherein the roof rail flange (42) overlaps an end flange of the roof bow (14) and is welded to the end flange.

## Patentansprüche

1. Fahrzeugdachpfosten-Baugruppe, umfassend:
einen Dachlängsträger (12),
einen Schweller (18) und
eine einteilige, teilweise hohle Stütze (10) mit einer Innenwand (34), einer Außenwand (32), einer Vorderwand (28) und einer Rückwand (30) und mit einem röhrenartigen unteren Abschnitt (24), der sich vom Schweller (18) aus nach oben erstreckt, einem oberen Abschnitt (22), der sich vom Dachlängsträger (12) aus nach unten erstreckt, wobei der obere Abschnitt (22) eine konvergierende röhrenartige Form hat, die von der Innenwand (34), der Außenwand (32), der Vorderwand (28) und der Rückwand (30) gebildet wird, die in der senkrecht nach oben führenden Richtung konvergieren, und Flansche (36, 38) hat, die sich von der Vorderwand und der Rückwand aus längs erstrecken, wobei das obere Ende des konvergierenden röhrenartigen Abschnitts (22) in einem zusammengedrückten Dachlängsträgerflansch (42) endet, der nur die Innenwand und die Außenwand beinhaltet und der an einer äußeren Oberfläche und einer oberen Oberfläche des Dachlängsträgers (12) montiert ist,
**dadurch gekennzeichnet, dass** die Flansche, die sich von der Vorderwand und der Rückwand aus erstrecken, an einem Zwischenpunkt auf der Vorderwand und Rückwand beginnen und in senkrechter Fahrzeugrichtung an Längsausdehnung zunehmen.

2. Fahrzeugdachpfosten-Baugruppe gemäß Anspruch 1, wobei der röhrenartige untere Abschnitt (24) in einem zusammengedrückten Schwellerflansch (48) endet, der nur eine Innenwand und eine Außenwand beinhaltet und der an einer Außenfläche des Schwellers (18) montiert ist.

3. Fahrzeugdachpfosten-Baugruppe gemäß Anspruch 2, wobei der Schwellerflansch (48) sich zu einer unteren Oberfläche des Schwellers (18) herum erstreckt.

4. Fahrzeugdachpfosten-Baugruppe gemäß Anspruch 3, wobei der Schwellerflansch (48) über einen Punktschweißflansch unter dem Schweller verfügt.

5. Fahrzeugdachpfosten-Baugruppe gemäß einem der vorhergehenden Ansprüche, wobei der röhrenartige untere Abschnitt (24) eine Innenwand hat, die einen konkaven Abschnitt (46) definiert, in dem ein Gurtaufroller montiert werden kann.

6. Fahrzeugdachpfosten-Baugruppe gemäß einem der vorhergehenden Ansprüche, wobei der Dachlängsträger (12) eine Vertiefung im Vergleich zu einer Außenfläche des Dachs definiert, die den Dachlängsträgerflansch (42) der Stütze aufnimmt.

7. Fahrzeugdachpfosten-Baugruppe gemäß einem der vorhergehenden Ansprüche, wobei der Dachlängsträgerflansch (42) mindestens zwei Metallschichten hat und wobei mindestens eine Metallschicht in begrenzten Bereichen entfernt wird, um eine Punktschweißung des Dachlängsträgerflanschs (42) an den Dachlängsträger (12) zu erleichtern.

8. Fahrzeugdachpfosten-Baugruppe gemäß einem der vorhergehenden Ansprüche, ferner einen Dachquerträger (14) umfassend, der sich in Fahrzeugquerrichtung erstreckt, und wobei der Dachlängsträgerflansch (42) einen Endflansch des Dachquerträgers (14) überlappt und an den Endflansch angeschweißt wird.

## Revendications

1. Ensemble de support de pavillon de véhicule, comprenant :
un brancard de pavillon (12) ;
un bas de caisse (18); et
un montant de support partiellement creux monobloc (10) ayant une paroi intérieure (34), une paroi extérieure (32), une paroi avant (28) et une paroi arrière (30), et ayant une section inférieure tubulaire (24) qui s'étend vers le haut depuis le bas de caisse (18), une section supérieure (22) qui s'étend vers le bas depuis le brancard de pavillon (12), dans lequel la section supérieure (22) a une forme tubulaire convergente formée par la paroi intérieure (34), la paroi extérieure (32), la paroi avant (28), et la paroi arrière (30) qui convergent dans la direction verticalement vers le haut, et a des brides (36, 38) s'étendant longitudinalement depuis la paroi avant et la paroi arrière, l'extrémité supérieure de la section tubulaire convergente (22) se terminant en une bride de brancard de pavillon comprimée (42) qui comprend uniquement la paroi intérieure et la paroi extérieure et qui est assemblée à une surface extérieure et à une surface supérieure du brancard de pavillon (12),
**caractérisé en ce que** les brides s'étendant depuis la paroi avant et la paroi arrière commencent à un point intermédiaire sur la paroi avant et la paroi arrière et augmentent en étendue longitudinale dans la direction verticale du véhicule.

2. Ensemble de support de pavillon de véhicule selon la revendication 1, dans lequel la section inférieure tubulaire (24) se termine en une bride comprimée de bas de caisse (48) qui comprend uniquement une paroi intérieure et une paroi extérieure et qui est assemblée à une surface extérieure du bas de caisse (18).

3. Ensemble de support de pavillon de véhicule selon la revendication 2, dans lequel la bride de bas de caisse (48) s'étend autour d'une surface inférieure du bas de caisse (18).

4. Ensemble de support de pavillon de véhicule selon la revendication 3, dans lequel la bride de bas de caisse (48) a une bride à soudure par points disposée en dessous du bas de caisse.

5. Ensemble de support de pavillon de véhicule selon l'une quelconque des revendications précédentes, dans lequel la partie inférieure tubulaire (24) a une paroi intérieure qui définit une partie concave (46) dans laquelle un rétracteur de ceinture de sécurité peut être assemblé.

6. Ensemble de support de pavillon de véhicule selon l'une quelconque des revendications précédentes, dans lequel le brancard de pavillon (12) définit un renfoncement par rapport à une surface extérieure du pavillon sur lequel la bride du brancard de pavillon (42) du montant de support est reçue.

7. Ensemble de support de pavillon de véhicule selon l'une quelconque des revendications précédentes, dans lequel la bride du brancard de pavillon (42) a au moins deux couches de métal et dans lequel au moins une couche de métal est enlevée dans des endroits limités afin de faciliter le soudage par points de la bride du brancard de pavillon (42) au brancard de pavillon (12).

8. Ensemble de support de pavillon de véhicule selon l'une quelconque des revendications précédentes, comprenant en outre un arceau de toit (14) s'étendant dans une direction transversale du véhicule et dans lequel la bride du brancard de pavillon (42) chevauche une bride d'extrémité de l'arceau de toit (14) et est soudée à la bride d'extrémité.
